# EUROPÄISCHE PATENTSCHRIFT

(11) **EP 0 734 607 B1**
(45) Veröffentlichungstag und Bekanntmachung des Hinweises auf die Patenterteilung: **27.05.1998**
(21) Anmeldenummer: 95902060.3
(22) Anmeldetag: 09.12.1994
(51) Int. Cl.: H02K 1/24, H02K 19/24

(54) **ELEKTRISCHE MASCHINE, INSBESONDERE DREHSTROMGENERATOR**
ELECTRIC MACHINE, IN PARTICULAR ROTARY CURRENT GENERATOR
MACHINE ELECTRIQUE, NOTAMMENT ALTERNATEUR A COURANT TRIPHASE

(30) Priorität: 16.12.1993 DE 4342870
(43) Veröffentlichungstag der Anmeldung: 02.10.1996
(73) Patentinhaber: ROBERT BOSCH GMBH, 70442 Stuttgart (DE)
(72) Erfinder: PFLÜGER, Gerhard, D-71706 Markgröningen (DE); LOBER, Stefan, D-70195 Stuttgart (DE)
(86) Internationale Anmeldenummer: DE9401463
(87) Internationale Veröffentlichungsnummer: WO9517033

(56) Entgegenhaltungen:
- WO-A-84/01478
- DE-A- 2 138 460
- FR-A- 2 330 187

## Beschreibung

### Stand der Technik

Die Erfindung betrifft eine elektrische Maschine, insbesondere einen Drehstromgenerator, nach dem Oberbegriff des Anspruch 1.

Es ist bekannt, Drehstromgeneratoren der gattungsgmäßen Art, beispielsweise bei der Bordnetzversorgung in Kraftfahrzeugen, aufgrund ihrer großen Wartungsfreundlichkeit, d.h. mit wenig Verschleißteilen, einzusetzen.

Der Generator erregt sich dabei durch eine feststehende, auf dem Innenpol sitzende Erregerwicklung. Das Erregerfeld magnetisiert dann die wechselweise angeordneten, rotierenden Klauen des Klauenpolläufersystems, auch Leitstückläufer genannt. Hierbei kommt das Prinzip zum Tragen, daß die um den Innenpol gewickelte Feldspule den gesamten Magnetfluß erregt und diesen über einen Luftspalt dem Klauenpolläufersystem zuleitet. Die rotierenden Klauen müssen dabei zueinander magnetisch isoliert, jedoch mechanisch verbunden angeordnet sein.

Diese Verbindung zwischen den Klauen der jeweiligen Polradhälften erfolgt gemäß dem Stand der Technik, wie er z.B. in der DE-OS 25 48 314 beschrieben ist, über einen unmagnetischen Ring, der innerhalb der Klauen liegt oder über mehrere unmagnetische Ringsegmentstücke, die zwischen den Klauen liegen, wobei die Klauen mit diesen unmagnetischen Verbindungselementen zumeist verlötet sind. Aus der Anordnung der zu verbindenden Teile ergeben sich jedoch relativ schwierig zugängliche Lötstellen und im Falle der Verwendung von Ringsegmentstücken auch eine Vielzahl von zu fertigenden und zu verbindenden Teilen, die die Fertigung des Klauenpolläufers kompliziert und teuer machen. Zu beachten ist auch, daß die Verbindungen zwischen den Klauen und den unmagnetischen Verbindungselementen durch die hohe Drehzahl des Klauenpolläufers und die dabei auftretende Fliehkraft großen Belastungen ausgesetzt ist und entsprechend gut gearbeitet sein muß, um das Risiko der Lösung einer Verbindung und damit der Zerstörung des gesamten Generators, gering zu halten.

Weiters wurde bereits zur Vermeidung der Verformung der Klauenspitzen aufgrund der Fliehhraftbelastung vorgeschlagen, jede Klauenspitze über einen nichtmagnetischen Verbindungsteil mit der ihr gegenüberliegenden Klauenwurzel des jeweiligen anderen Polringes zu verbinden. Jedoch auch diese Lösung schafft keine Vereinfachung bei der Fertigung.

Ein weiterer wichtiger Aspekt für das einwandfreie Funktionieren von Generatoren der eingangs genannten Art ist die ausreichende Kühlung des Läufersystems, die gemäß Stand der Technik eine Luftkühlung oder eine Flüssigkeitskühlung sein kann und mittels Temperaturfühler überwacht werden, um gegebenenfalls bei Überhitzung ein Zusatzgebläse einzuschalten oder den Betrieb des Generators zu stoppen.

Zweck der vorliegenden Erfindung ist unter anderem eine elektrische Maschine, insbesondere Drehstromgenerator, der gattungsgemäßen Art zu schaffen, die möglichst sicher und wartungsfrei aufgrund hochbelastbarer Verbindungen zwischen Verbindungselement und den Klauen der Polradhälften ist und dennoch durch eine einfache und kostengünstige Fertigung gebaut werden kann. Ferner soll die Abfuhr der Verlustwärme bei der erfindungsgemäßen elektrischen Maschine einfach und effizizient sein.

### Vorteile der Erfindung

Erfindungsgemäß wird die Aufgabe durch die im Kennzeichen des Anspruchs 1 angegebenen Merkmale gelöst.

Die Anordnung der als Verbindungselement dienenden nicht magnetischen Platine an der den Klauen des ersten Polringes abgewandten Fläche des ersten Polringes erlaubt es, zuerst die beiden Polradhälften zusammenzusetzen, dann die sie verbindende Platine anzufügen - oder umgekehrt - und danach alle Maßnahmen zur Befestigung der Platine an den beiden Polradhälften in einem Arbeitsvorgang vorzunehmen. Zwischen der genannten Fläche des ersten Polringes und der Platine ergibt sich zusätzlich der Vorteil, einer großen Verbindungsfläche, die auch die Abgabe der Verlustwärme vom Klauenpolläufer auf die Platine begünstigt, von wo sie durch ein herkömmliches Kühlsystem leicht abgeführt werden kann.

Vorzugsweise wird die Verbindung zwischen der Platine und den Polradhälften durch Schmelzschweißen hergestellt, wodurch sich eine höchst zuverlässige Verbindung ergibt.

Vorteilhafterweise sind die Klauen des zweiten Polringes länger als die Klauen des ersten Polringes und erstrecken sich in den Lücken zwischen den Klauen des ersten Polringes bis zur genannten Fläche des ersten Polringes. Die Verkürzung der Klauen des ersten Polringes erhöht die Schleuderfestigkeit des Klauenpolläufersystems, da die Fliehkraftbelastung an den nicht verbundenen Spitzen dieser Klauen verringert wird. Eine Verlängerung der Klauen des zweiten Polringes bis zur genannten Fläche des ersten Polringes führt dazu, daß alle Verbindungstellen der Polradhälften mit der Platine in einer Ebene liegen und somit der Verbindungsvorgang weiter vereinfacht wird und leicht einer Automatisierung zugänglich ist.

Weiters kann erfindungsgemäß die nichtmagnetische Platine an ihrem Umfang einen ringförmigen Ansatz aufweisen, der in Stufen in den Spitzen der Klauen des zweiten Polringes und im seinen Klauen abgewandten Bereich des ersten Polringes eingreift. Damit ergibt sich eine genaue und einfache Positionierung der zu verbindenden Teile und die Verbindungsfläche wird erhöht.

Die Polradhälften können als Schmiedeteile ausgebildet sein, in die die genannten Stufen durch Dreharbeit eingearbeitet werden. Die Fertigung der Polradhälften ist somit kostengünstig und dennoch kann eine exakt gefertigte Fügestelle für die Verbindung zwischen der Platine und den Polradhälften hergestellt werden. Dies erübrigt ein kontinuierliches Nachstellen der Schweißparameter und erlaubt einen Laserschweißvorgang, was gegenüber herkömmlichen Schweißen einen geringeren Materialverzug verursacht.

Vorzugweise ist zwischen der nicht magnetischen Platine und dem annähernd parallel dazu liegenden Abschnitt des Gehäuses ein enger Luftspalt vorgesehen ist, der eine effiziente Abführung der Verlustwärme ermöglicht.

Zur Unterstützung des Kühleffekts kann weiters die nicht magnetische Platine mit Bohrungen versehen sein, durch welche auch Wuchtbohrungen am Klauenpolläufer angebracht werden können.

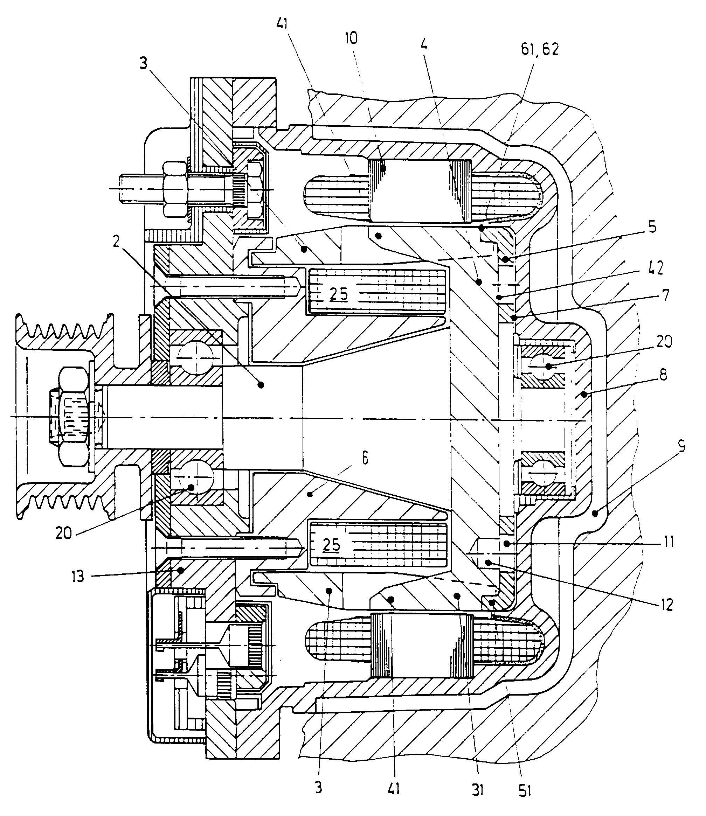

Die Erfindung wird nun anhand eines in der beiliegenden Zeichnung dargestellten Ausführungsbeispiels näher beschrieben, wcbei die Figur einen Schnitt durch einen Generator mit einem Klauenpolläufersystem zeigt.

### Beschreibung des Ausführungsbeispiels:

Der in der Figur gezeigte Drehstromgenerator weist einen in seiner Grundstruktur bekannten Aufbau auf und besteht aus einem antriebsseitigen Gehäuseflansch 13 und einer der Antriebsseite abgewandten Gehäusestirnwand 8, die jeweils eine Lagerung 20 für eine Läuferwelle 2 aufweisen. Innerhalb des topfförmigen Gehäuses ist ein Stator 10 befestigt. Auf der Welle 2 ist ein Klauenpolläufersystem mit einem als Polradhälfte ausgebildeten, in Klauen 41 auslaufenden, auf der Welle 2 befestigten ersten Polring 4 und einem in Klauen 31 auslaufenden zweiten Polring 3 als weitere Polradhälfte, wobei sich jeweils die Spitzen der Klauen 31, 41 des einen Polrings 3, 4 in die Lücken zwischen den Klauen 41, 31 des anderen Polringes 4, 3 erstrecken. Zwischen den Klauen 31, 41 des Klauenpolläufersystems und der Welle 2 ist eine feststehende Erregerwicklung 25 angeordnet, die auf einem am Flansch 13 festgeschraubten Eisenkern 6 sitzt.

Die Klauen 41 des ersten Polringes 4 sind gegenüber jenen in bekannten Klauenpolläufersystemen mit reduzierter Länge ausgeführt, wodurch deren Klauenaufweitung aufgrund der im Betrieb auftretenden Fliehkräfte im zulässigen Bereich bleibt. Um die notwendige Überdekkung von Stator 10 und den gekürzten Klauen 41 aufrechtzuerhalten ist der Stator gegenüber dem bisherigen Aufbau von Generatoren dieser Art entsprechend seitlich zur Stirnwand 8 hin versetzt.

Die Klauen 31 des zweiten Polringes 3 sind hingegen länger als üblicherweise in Klauenpolläufersystemen, wobei die Verbindung vorzugsweise eine Verschweißung der Spitzen der Klauen 31 mit einer Platine 5 aus unmagnetischem Material ihre Aufweitung aufgrund der Fliehkraft verhindert.

Die Platine 5 ist ringförmig auf der der Gehäusestirnwand 8 zugewandten Fläche 42 des ersten Polringes 4 an diesen anschließend angeordnet und mit diesem verschweißt. Somit verbindet die Platine 5 die beiden Polradhälften 3, 4 mechanisch und magnetisch isolierend. Die Klauen 31 des zweiten Polringes 3 erstrecken sich über die gesamte Länge des ersten Polringes 4 zwischen dessen Klauen 41 und bis zur Fläche 42, sodaß die Verbindungsstellen der Platine mit den Spitzen der Klauen 31 und mit dem Polring 4 im selben axialen Bereich liegen. Wie man der Zeichnung entnehmen kann, hat die Platine 5 einen ins Gehäuseinnere weisenden, rinförmigen Ansatz 51, der in Stufen 61 in den Spitzen der Klauen 31 und in Stufen 62 im Polring 4 eingreift. Diese Stufen 61, 62 können in die als kostengünstige Schmiedeteile gearbeiteten Polringe 3, 4 gedreht werden, sodaß die Platine 5 formschlüssig in die Polringe 3, 4 eingepaßt werden kann. Die so entstandenen, exakten Fügestellen zwischen der Platine 5 und den Polringen 3, 4 erlaubt eine Verschweißung mit einer Laserschweißvorrichtung an diesen Stellen.

Zwischen der Platine 5 und der Gehäusewand 8 ist ein enger Luftspalt 7 vorgesehen, der die im Klauenpolläufer auftretende Verlustwärme an die Gehäusewand 8 Überträgt, von wo sie durch ein den Generator umströmendes Kühlmedium 9 abgeführt wird. Zur Unterstützung des Kühleffektes ist die Platine 5 mit Bohrungen 11, z.B. sechs Stück in 60°-Teilung angeordnet, versehen. Dies bewirkt eine Verwirbelung der erwärmten Luft im Inneren des Generators. Zusätzlich ermöglichen diese Bohrungen 11 das Anbringen von Wuchtbohrungen 12 am Klauenpolläufer.

## Patentansprüche

1. Elektrische Maschine, insbesondere Drehstromgenerator, mit einem in einem Gehäuse befestigten Stator (10) und mit einem auf einer Welle (2) gelagerten Klauenpolläufersystem mit einem als Polradhälfte ausgebildeten, in Klauen (41) auslaufenden ersten Polring (4) und einem mit dem ersten Polring durch ein unmagnetisches Verbindungsmittel mechanisch verbundenen, in Klauen (31) auslaufenden zweiten Polring (3) als Polradhälfte, wobei sich jeweils die Spitzen der Klauen des einen Polrings in die Lücken zwischen den Klauen des anderen Polrings erstrecken, sowie einer wellenseitigen den Polringen zugeordneten Erregerwicklung (25), dadurch gekennzeichnet, daß das unmagnetische Verbindungsmittel in Form einer nichtmagnetischen Platine (5) sich an die den Klauen (41) des ersten Polringes (4) abgewandte Fläche (42) des ersten Polringes (4) anschließt und mit diesem im Bereich der Fläche sowie mit den Spitzen der Klauen (31) des zweiten Polringes (3) verbunden ist.

2. Elektrische Maschine nach Anspruch 1, dadurch gekennzeichnet, daß die den Klauen (41) des ersten Polringes (4) abgewandte Fläche (42) des ersten Polringes (4) und die Spitzen der Klauen (31) des zweiten Polringes (3) durch Schmelzschweißen mit der nichtmagnetischen Platine verbunden sind.

3. Elektrische Maschine nach Anspruch 1 oder 2, dadurch gekennzeichnet, daß die Klauen (31) des zweiten Polringes (3) länger als die Klauen (41) des ersten Polringes (4) sind und sich in den Lücken zwischen den Klauen (41) des ersten Polringes (4) bis zur genannten Fläche (42) des ersten Polringes (4) erstrecken.

4. Elektrische Maschine nach Anspruch 3, dadurch gekennzeichnet, daß die nichtmagnetische Platine (5) an ihrem Umfang einen ringförmigen Ansatz (51) aufweist, der in Stufen (61, 62) in den Spitzen der Klauen (31) des zweiten Polringes (3) und im seinen Klauen (41) abgewandten Bereich des ersten Polringes (4) eingreift.

5. Elektrische Maschine nach Anspruch 4, dadurch gekennzeichnet, daß die beiden Polringe (3, 4) Schmiedeteile sind in die die Stufen (61, 62) durch Drehbearbeitung eingearbeitet sind.

6. Elektrische Maschine nach einem der vorhergehenden Ansprüche, dadurch gekennzeichnet, daß zwischen der nicht magnetischen Platine (5) und dem annähernd parallel dazu liegenden Abschnitt des Gehäuses (8) ein Luftspalt vorgesehen ist.

7. Elektrische Maschine nach einem der vorhergehenden Ansprüche, dadurch gekennzeichnet, daß die nicht magnetische Platine (5) mit Bohrungen (12) versehen ist.

8. Elektrische Maschine nach einem der vorhergehenden Ansprüche, dadurch gekennzeichnet, daß die Platine (5) an der Stirnfläche (42) desjenigen Polringes (4) angeordnet ist, welcher auf der Welle (2) der Maschine befestigt ist.

## Claims

1. Electric machine, in particular three-phase generator, having a stator (10), which is mounted in a housing, and having a claw pole rotor system, which is mounted on a shaft (2), having a first pole ring (4), which is designed as half of a pole wheel and ends in claws (41), and a second pole ring (3), as half of a pole wheel, which is mechanically connected to the first pole ring by means of non-magnetic connecting means and ends in claws (31), in each case the tips of the claws of one of the pole rings extending into the gaps between the claws of the other pole ring, and having a shaft-side exciter winding (25), which is assigned to the pole rings, characterized in that the non-magnetic connecting means adjoin, in the form of a non-magnetic plate (5) that face (42) of the first pole ring (4) which faces away from the claws (41) of the first pole ring (4), and are connected to said first pole ring (4) in the region of the face as well as to the tips of the claws (31) of the second pole ring (3).

2. Electric machine according to Claim 1, characterized in that that face (42) of the first pole ring (4) which faces away from the claws (41) of the first pole ring (4) and the tips of the claws (31) of the second pole ring (3) are connected to the non-magnetic plates by fusion welding.

3. Electric machine according to Claim 1 or 2, characterized in that the claws (31) of the second pole ring (3) are longer than the claws (41) of the first pole ring (4) and extend in the gaps between the claws (41) of the first pole ring (4) as far as the aforesaid face (42) of the first pole ring (4).

4. Electric machine according to Claim 3, characterized in that the non-magnetic plate (5) has, on its circumference, an annular projection (51) which engages in steps (61, 62) in the tips of the claws (31) of the second pole ring (3) and in the region, facing away from its claws (41), of the first pole ring (4).

5. Electric machine according to Claim 4, characterized in that the two pole rings (3, 4) are forged components, in which the steps (61, 62) are made by turning.

6. Electric machine according to one of the preceding claims, characterized in that an airgap is provided between the non-magnetic plate (5) and the section of the housing (8) which lies approximately parallel thereto.

7. Electric machine according to one of the preceding claims, characterized in that the non-magnetic plate (5) is provided with drill holes (12).

8. Electric machine according to one of the preceding claims, characterized in that the plate (5) is arranged on the end face (42) of that pole ring (4) which is mounted on the shaft (2) of the machine.

## Revendications

1. Machine électrique, notamment générateur à courant triphasé comprenant un stator (10) fixé dans un boîtier et un système de rotor à griffes polaires monté sur un arbre (2),
- une première bague polaire (4), en forme de moitié de roue polaire, se terminant par des griffes (41) et une seconde bague polaire (3) se terminant par des griffes formant une moitié de roue polaire, cette seconde bague polaire étant reliée à la première bague polaire, mécaniquement par un moyen de liaison amagnétique,
- les pointes des griffes d'une bague polaire arrivant dans les intervalles entre les griffes de l'autre bague polaire,
- ainsi qu'un enroulement d'excitation (25) prévu du côté de l'arbre associé aux bagues polaires,
caractérisée en ce que
le moyen de liaison amagnétique est sous la forme d'une platine non magnétique (5) adjacente à la surface (42) de la première bague polaire (4) opposée aux griffes (41) de la première bague polaire (4), et reliée à celle-ci au niveau de la surface ainsi qu'aux pointes des griffes (31) de la seconde bague polaire (3).

2. Machine électrique selon la revendication 1,
caractérisée en ce que
la surface (42) de la première bague polaire (4), opposée aux griffes (41) de la première bague polaire (4), et les pointes des griffes (31) de la seconde bague polaire (3) sont reliées à la platine non magnétique par soudage par fusion.

3. Machine électrique selon la revendication 1 ou 2,
caractérisée en ce que
les griffes (31) de la seconde bague polaire (3) sont plus longues que les griffes (41) de la première bague polaire (4) et s'étendent dans les intervalles entre les griffes (41) de la première bague polaire (4) jusqu'à la surface (42) de la première bague polaire (4).

4. Machine électrique selon la revendication 3,.
caractérisée en ce que
la platine non magnétique (5) comporte à sa périphérie un épaulement annulaire (51) qui pénètre dans les gradins (61, 62) des pointes des griffes (31) de la seconde bague polaire (3) et dans la zone de la première bague polaire (4), opposée à ses griffes (41).

5. Machine électrique selon la revendication 4,
caractérisée en ce que
les deux bagues polaires (3, 4) sont des pièces forgées dans lesquelles les gradins (61, 62) sont usinés au tour.

6. Machine électrique selon l'une quelconque des revendications précédentes,
caractérisée en ce qu'
entre la platine non magnétique (5) et le segment sensiblement parallèle du boîtier (6), il subsiste un entrefer.

7. Machine électrique selon l'une quelconque des revendications précédentes,
caractérisée en ce que
la platine non magnétique (5) est munie du perçage (12).

8. Machine électrique selon l'une quelconque des revendications précédentes,
caractérisée en ce que
la platine (5) est prévue sur la face frontale (42) de la bague polaire (4) qui est fixée sur l'arbre (2) de la machine.
